# EUROPEAN PATENT APPLICATION

(11) **EP 2 555 396 A2**
(43) Date of publication of application: **06.02.2013**
(21) Application number: 12150119.1
(22) Date of filing: 04.01.2012
(51) Int. Cl.: H02K 41/03

(54) **Linear motor armature and linear motor**

(30) Priority: 03.08.2011 JP 2011170234; 03.08.2011 JP 2011170235
(71) Applicant: Kabushiki Kaisha Yaskawa Denki, Kitakyushu-shi, Fukuoka 806-0004 (JP)
(72) Inventor: Nagamatsu, Seigo, Kitakyushu-shi Fukuoka 806-0004 (JP); Kamiki, Yasuaki, Kitakyushu-shi Fukuoka 806-0004 (JP); Kawahara, Atsushi, Kitakyushu-shi Fukuoka 806-0004 (JP); Yugawa, Kazuya, Kitakyushu-shi Fukuoka 806-0004 (JP); Yanagi, Keiji, Kitakyushu-shi Fukuoka 806-0004 (JP)
(74) Representative: Grünecker, Kinkeldey, Stockmair & Schwanhäusser

(57) **Abstract**

A linear motor armature (20, 20a to 20e, 40) according to embodiments includes an armature core (21, 41), supporting teeth (23a, 23b, 23a_1 to 23a_4, 43a, 43b), and a detecting unit (25, 452). The armature core (21, 41) includes main teeth (21b, 41b). The supporting teeth (23a, 23b, 23a_1 to 23a_4, 43a, 43b) are provided on stroke direction ends of the armature core (21, 41). The detecting unit (25, 452) detects a position of the armature core (21, 41). Moreover, the detecting unit (25, 452) is provided at a position overlapping with the supporting teeth (23a, 23b, 23a_1 to 23a_4, 43a, 43b) in the stroke direction.

## Description

### FIELD

The embodiments discussed herein are directed to a linear motor armature and a linear motor.

### BACKGROUND

A conventional linear motor that linearly moves a mover along a stator by using attractive and repulsive forces between magnetic poles has been known as a kind of an electric motor.

The linear motor may include a Hall sensor that can be provided in the mover as a detecting unit that detects a position of the mover. The detecting unit is provided on, for example, a stroke direction end of the mover. This technique has been known as disclosed in, for example, Japanese Laid-open Patent Publication No. 1996-168232.

However, assuming that the detecting unit is provided on the stroke direction end of the mover, there is a problem in that a movable range of the mover, that is, an available stroke shortens by the length of the detecting unit.

An object of an aspect of embodiments is to provide a linear motor armature and a linear motor that can suppress a reduction of an available stroke.

### SUMMARY

A linear motor armature according to an aspect of embodiments includes an armature core, supporting teeth, and a detecting unit. The armature core includes main teeth. The supporting teeth are provided on stroke direction ends of the armature core. The detecting unit detects a position of the armature core. Moreover, the detecting unit is provided at a position overlapping with the supporting teeth in a stroke direction.

According to an aspect of embodiments, a linear motor armature and a linear motor that can suppress a reduction of an available stroke can be provided.

### BRIEF DESCRIPTION OF DRAWINGS

A more complete appreciation of the invention and many of the attendant advantages thereof will be readily obtained as the same becomes better understood by reference to the following detailed description when considered in connection with the accompanying drawings, wherein:

FIG. 1A is a schematic side view of a linear motor according to a first embodiment;

FIG. 1B is a schematic plan view of the linear motor according to the first embodiment;

FIG. 1C is a schematic cross-sectional view of the linear motor according to the first embodiment;

FIG. 2A is a schematic front view illustrating an arrangement relationship between supporting teeth and a detecting unit;

FIG. 2B is a schematic plan view illustrating the arrangement relationship between the supporting teeth and the detecting unit;

FIG. 2C is a schematic perspective view illustrating the arrangement relationship between the supporting teeth and the detecting unit;

FIG. 3A is a diagram illustrating an example of a mounting arrangement of the detecting unit;

FIG. 3B is a diagram illustrating another example of the mounting arrangement of the detecting unit;

FIGs. 4 and 5 are schematic perspective views illustrating another example of the arrangement relationship between the supporting teeth and the detecting unit;

FIGs. 6A to 6C are schematic front views illustrating another example of the arrangement relationship between the supporting teeth and the detecting unit;

FIG. 7A is a schematic side view of a linear motor according to a third embodiment;

FIG. 7B is a schematic plan view of the linear motor according to the third embodiment;

FIG. 7C is a schematic cross-sectional view of the linear motor according to the third embodiment;

FIG. 8 is a schematic side view illustrating an arrangement relationship between supporting teeth and a magnetic field detecting unit;

FIG. 9 is a schematic perspective view illustrating the arrangement relationship between the supporting teeth and the magnetic field detecting unit;

FIG. 10 is a diagram illustrating an example of a mounting arrangement of the magnetic field detecting unit;

FIG. 11 is a diagram illustrating the internal configuration of the magnetic field detecting unit;

FIG. 12A is a diagram illustrating a magnetic flux formed by permanent magnets;

FIG. 12B is a diagram illustrating the detection result of the magnetic flux illustrated in FIG. 12A;

FIG. 13A is a diagram illustrating a magnetic flux formed by the permanent magnet and the supporting teeth;

FIG. 13B is a diagram illustrating the detection result of the magnetic flux illustrated in FIG. 13A;

FIG. 14 is a schematic perspective view illustrating another example of the arrangement relationship between the supporting teeth and the magnetic field detecting unit; and

FIGs. 15A and 15B are schematic cross-sectional views illustrating another example of the arrangement relationship between the supporting teeth and the magnetic field detecting unit.

### DESCRIPTION OF EMBODIMENTS

A linear motor armature according to embodiments includes an armature core, supporting teeth, and a detecting unit. The armature core includes main teeth.
The supporting teeth are provided on stroke direction ends of the armature core. The detecting unit detects a position of the armature core. Moreover, the detecting unit is provided on a position overlapping with the supporting teeth in a stroke direction.

A linear motor according to the embodiments includes a magnetic field unit and an armature. The magnetic field unit includes a plurality of magnets laid side-by-side. The armature is placed opposite the magnetic field unit. Herein, the armature includes an armature core, supporting teeth, and a detecting unit. The armature core includes main teeth. The supporting teeth are provided on stroke direction ends of the armature core. The detecting unit detects a position of the armature core. The detecting unit is provided at a position overlapping with the supporting teeth in a stroke direction.

Hereinafter, a linear motor armature and a linear motor according to embodiments of the present disclosure will be described in detail. In addition, the embodiments disclosed below are not intended to limit the present invention.

### First Embodiment

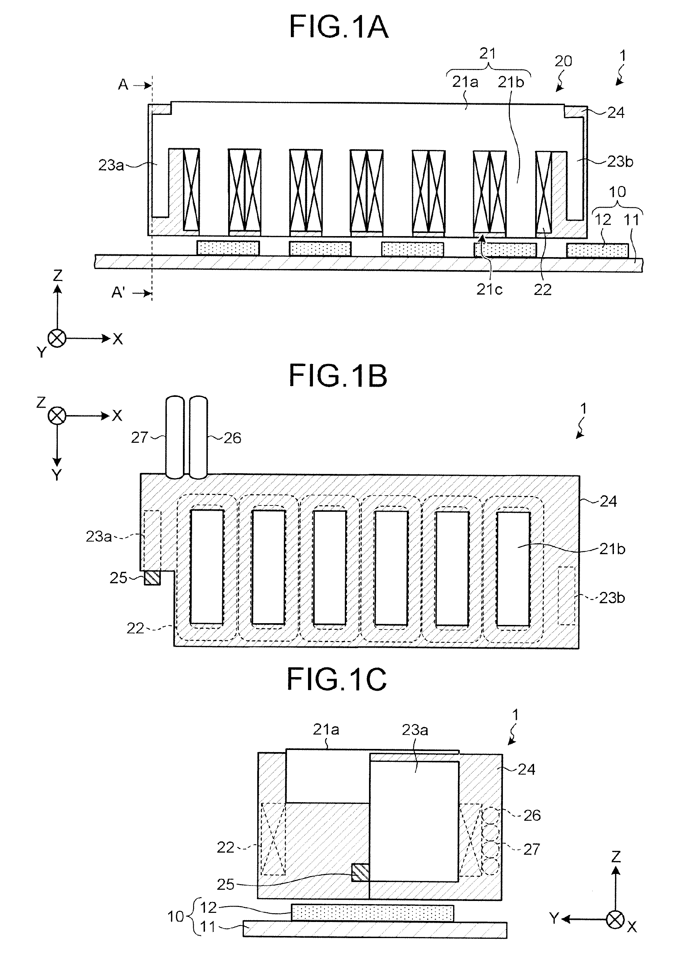

First, the entire configuration of a linear motor according to the first embodiment is explained with reference to FIGs. 1A to 1C. FIGs. 1A to 1C are respectively a schematic side view, a schematic plan view, and a schematic cross-sectional view of a linear motor 1 according to the first embodiment. Herein, FIG. 1B is a schematic plan view obtained by viewing the linear motor 1 illustrated in FIG. 1A from the positive direction of the Z-axis. FIG. 1C is a schematic cross-sectional view viewed from the A-A' line illustrated in FIG. 1A.

Hereinafter, up and down directions, left and right directions, and front and back directions may be used to explain a relative positional relationship between components of the linear motor. The reference of each direction is the case where the linear motor is provided on a horizontal surface as illustrated in FIG. 1A. Specifically, it is assumed in FIG. 1A that positive and negative directions of X-axis are respectively front and back of the linear motor, positive and negative directions of Y-axis are respectively left and right of the linear motor, and positive and negative directions of Z-axis are respectively up and down of the linear motor.

As illustrated in FIGs. 1A to 1C, the linear motor 1 according to the first embodiment includes a magnetic field unit 10 and an armature 20. It will be explained in the first embodiment that the magnetic field unit 10 is a stator and the armature 20 is a mover. Moreover, the number of magnetic poles and the number of slots are not limited to the numbers illustrated in FIGs. 1A to 1C.

The magnetic field unit 10 includes a magnetic field yoke 11 and permanent magnets 12. The magnetic field yoke 11 is a substantially rectangular solid-shaped member that extends along a predetermined direction (herein, X-axis direction). The magnetic field yoke 11 is formed by laminating lamina members such as magnetic steel sheets. Alternatively, the magnetic field yoke 11 may be simply formed of a plate material that is not a laminated layer. Moreover, the permanent magnets 12 are laid side-by-side on the magnetic field yoke 11. Herein, it is explained that the magnetic field unit 10 includes the permanent magnets 12. However, the magnetic field unit 10 may include electromagnets instead of the permanent magnets 12.

The armature 20 is a member that is placed opposite the magnetic field unit 10 via a gap and linearly moves along the magnetic field unit 10. The armature 20 includes an armature core 21, armature coils 22, supporting teeth 23a and 23b, molding resin 24, and a detecting unit 25. Hereinafter, the moving direction of the armature 20, that is, the positive and negative directions of X-axis are referred to as a stroke direction.

The armature core 21 includes a yoke 21a that is formed in the shape of a substantially rectangular solid and a plurality of main teeth 21b that protrudes from the yoke 21a toward the magnetic field unit 10. The armature core 21 is formed by laminating lamina members such as magnetic steel sheets.

Spaces between the main teeth 21b are referred to as slots 21c. The inner circumferential surfaces of the slots 21c are covered with insulation materials, and the armature coils 22 made by winding insulated covered wires are put in the slots 21c. A lead wire 26 for a motor is connected to the armature coils 22 (see FIG. 1B).

The supporting teeth 23a and 23b are members that are respectively provided on both ends of the armature core 21 in the stroke direction in order to reduce cogging that is a factor of thrust variation. Specifically, the ends of the supporting teeth 23a and 23b are fixed to the yoke 21a, and the supporting teeth 23a and 23b protrude from the ends toward the magnetic field unit 10.

It is explained as illustrated in FIG. 1A in the first embodiment that an interval between the permanent magnets 12 and the supporting teeth 23a and 23b is larger than an interval between the permanent magnets 12 and the main teeth 21b, that is to say, the supporting teeth 23a and 23b are shorter than the main teeth 21b. However, the length of the supporting teeth 23a and 23b may be equal to that of the main teeth 21b.

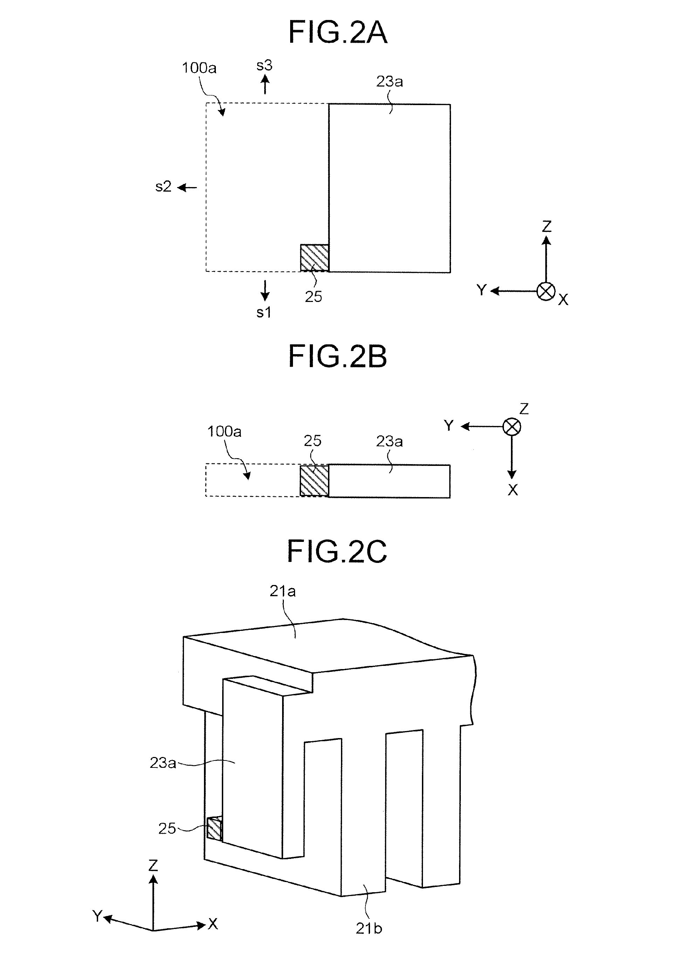

Herein, the armature 20 according to the first embodiment includes the supporting teeth 23a and 23b of which each is partially cut out. Moreover, the armature 20 according to the first embodiment includes the detecting unit 25 that is provided in a space obtained by cutting out the supporting teeth 23a and 23b to suppress the reduction of an available stroke. This point is specifically explained with reference to FIGs. 2A to 2C.

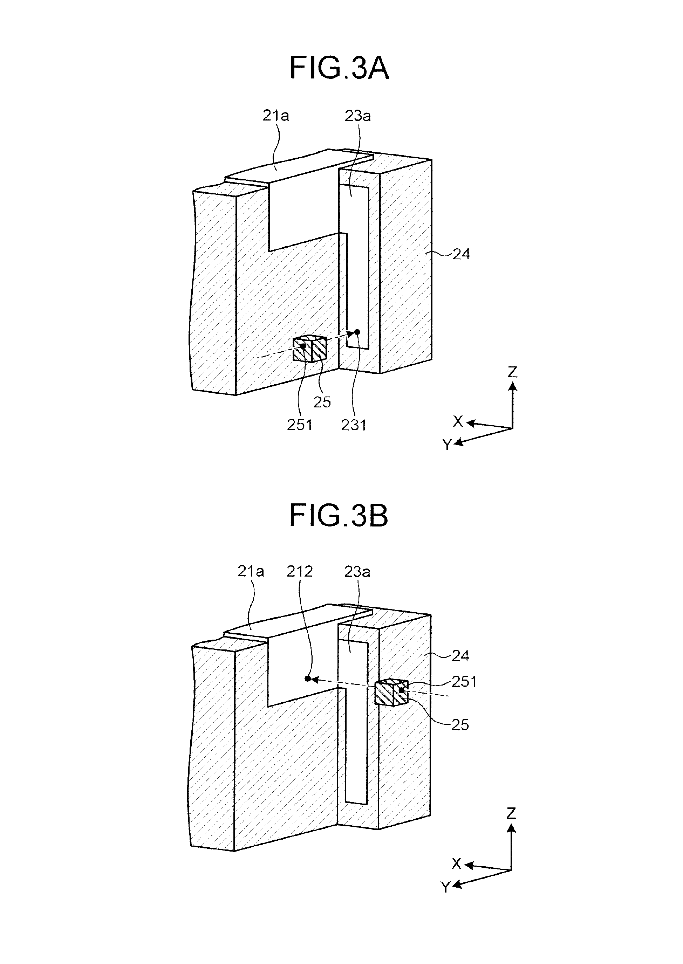

The molding resin 24 is a resin member that molds resin into the armature core 21, the armature coils 22, and the supporting teeth 23a and 23b. As illustrated in FIGS. 1B and 1C, the molding resin 24 covers the supporting teeth 23a and the yoke 21a in such a manner that the end face of the supporting teeth 23a in the negative direction of Y-axis and the end face of the yoke 21a in the positive direction of X-axis are exposed. The detecting unit 25 is mounted on the end face of the supporting teeth 23a exposed from the molding resin 24. This point is explained below with reference to FIG. 3A.

The detecting unit 25 detects a relative position of the armature 20 to the magnetic field unit 10. In the first embodiment, the detecting unit 25 is a magnetic field detecting unit such as a Hall sensor. The linear motor 1 controls a conduction direction in which electric currents flow into the armature coils 22 on the basis of the detection result of the relative position of the armature 20 performed by the detecting unit 25. In addition, a lead wire 27 for a detecting unit is connected to the detecting unit 25 (see FIG. 1B).

In FIG. 1B, the detecting unit 25 is provided in the cut-out space of the supporting teeth 23a. As a result, the linear motor 1 according to the first embodiment can suppress the reduction of an available stroke of the armature 20.

In the example of in FIG. 1B, it has been explained that the detecting unit 25 is provided in the cut-out space of the supporting teeth 23a. However, the arrangement of the detecting unit 25 is not limited to this. In other words, a part of the detecting unit 25 may be provided outside the cut-out space of the supporting teeth 23a. For example, a part of the detecting unit 25 may protrude in the negative direction of X-axis in FIG. 1B. Even in this case, because the detecting unit 25 can be provided with respect to the cut-out space of the supporting teeth 23a, the reduction of an available stroke of the armature 20 can be suppressed.

Hereinafter, the arrangement relationship of the supporting teeth 23a and the detecting unit 25 is specifically explained with reference to FIGs. 2A to 2C. FIGs. 2A to 2C are respectively a schematic front view, a schematic plan view, and a schematic perspective view illustrating the arrangement relationship of the supporting teeth 23a and the detecting unit 25.

As illustrated in FIGs. 2A to 2C, the supporting teeth 23a includes a cutout portion 100a that is a portion obtained by cutting out the supporting teeth 23a from one end face to the other end face in the stroke direction, that is, from one end face of the negative direction of X-axis to the other end face of the positive direction of X-axis.

The cutout portion 100a is formed by opening the s1 side (the negative direction of Z-axis) facing the magnetic field unit 10, the s2 side (the positive direction of the Y-axis) adjacent to the s1 side facing the magnetic field unit 10, and the opposite s3 side (the positive direction of Z-axis) of the s1 side facing the magnetic field unit 10. In other words, the supporting teeth 23a has a shape in which one-half corresponding to its left side is cut out when being viewed from the positive direction of X-axis. The detecting unit 25 is provided in the cutout portion 100a of the supporting teeth 23a.

The conventional armature has a problem in that a movable range of a mover, that is, an available stroke is shortened by the length of a detecting unit by providing the detecting unit on a stroke direction end. Particularly, this problem is easily actualized when the supporting teeth are provided on stroke direction ends of the armature core like the first embodiment.

Therefore, it has been explained in the first embodiment that the detecting unit 25 is provided in a space obtained by cutting out the supporting teeth 23a. As a result, because a length occupied by members other than the armature core 21 in a stroke direction length of the armature 20 can be suppressed, the reduction of an available stroke can be suppressed while maintaining the thrust of the armature 20.

The cutout portion 100a according to the first embodiment opens a side facing the magnetic field unit 10. Furthermore, the whole of the detecting unit 25 is provided in the cutout portion 100a. For this reason, the detection accuracy of a magnetic field performed by the detecting unit 25 does not decrease easily.

The supporting teeth 23a and 23b according to the first embodiment have the same shape as illustrated in FIG. 1B and are arranged in a point-symmetrical manner with respect to the center of the armature core 21 when being viewed from the Z-axis direction. For this reason, even if a part of the supporting teeth 23a and 23b is cut out, cogging can be reduced in a balanced manner.

In the supporting teeth 23a and 23b, its part is cut out, and further a length, a thickness, and the like are optimized in accordance with the cut-out shape in such a manner that a cogging reduction effect does not decrease as much as possible due to the cutout. For this reason, the installation space of the detecting unit 25 can be saved while maintaining a cogging reduction effect as much as possible.

The detecting unit 25 may be provided at a position distant from the supporting teeth 23a. As a result, because the detecting unit 25 does not easily come under the influence of the supporting teeth 23a, the detection accuracy of the detecting unit 25 is improved.

It has been explained in the first embodiment that the detecting unit 25 is a magnetic field detecting unit. However, the detecting unit 25 may be a detecting unit other than the magnetic field detecting unit. For example, the detecting unit 25 may be an infrared sensor or the like that detects a relative position of the armature core 21 by performing predetermined markings on surfaces of the permanent magnets 12 facing the armature 20 and optically detecting the markings.

Next, a mounting direction of the detecting unit 25 is explained with reference to FIG. 3A. FIG. 3A is a diagram illustrating an example of a mounting arrangement of the detecting unit 25.

The detecting unit 25 according to the first embodiment is unitized and is removably provided on the supporting teeth 23a and 23b molded by the molding resin 24.

For example, as illustrated in FIG. 3A, the supporting teeth 23a has a threaded hole 231 that is formed along the negative direction of Y-axis from an end face exposed from the molding resin 24. Moreover, the detecting unit 25 has a threaded hole 251. Then, the detecting unit 25 can be mounted on the supporting teeth 23a by inserting a screw (not illustrated) into the threaded hole 231 of the supporting teeth 23a and the threaded hole 251 of the detecting unit 25.

In this way, assuming that the detecting unit 25 is removably provided, the detecting unit 25 can be easily replaced when the detecting unit 25 is degraded or damaged, for example, and thus the maintenance of the armature 20 can be improved.

The cutout portion 100a of the supporting teeth 23a (see FIG. 2A) opens the s1 side facing the magnetic field unit 10, the s2 side adjacent to the s1 side facing the magnetic field unit 10, and the opposite s3 side of the s1 side facing the magnetic field unit 10. For this reason, an attaching and detaching work of the detecting unit 25 can be easily performed.

As illustrated in FIG. 3A, the detecting unit 25 is provided at a position closer to the magnetic field unit 10 in the supporting teeth 23a. As a result, a detection accuracy of a magnetic field performed by the detecting unit 25 can be raised.

As illustrated in FIG. 3A, it has been explained that the detecting unit 25 is provided on the supporting teeth 23a. However, the mounting arrangement of the detecting unit 25 is not limited to this. FIG. 3B is a diagram illustrating another example of the mounting arrangement of the detecting unit 25.

As illustrated in FIG. 3B, the detecting unit 25 may be provided on the yoke 21a, for example. In this case, a threaded hole 212 is formed along the positive direction of X-axis from an end face of the yoke 21a exposed from the molding resin 24, and a screw (not illustrated) is inserted into the threaded hole 212 of the yoke 21a and the threaded hole 251 of the detecting unit 25.

The detecting unit 25 may be provided in a state where it is floating in the molding resin 24.

As described above, because it has been explained in the first embodiment that the detecting unit 25 is provided in a space obtained by cutting out the supporting teeth 23a, the reduction of an available stroke can be suppressed.

### Second Embodiment

The cutout of a supporting teeth and the arrangement of a detecting unit are not limited to the example of the first embodiment. Therefore, another example of the cutout of a supporting teeth and the arrangement of a detecting unit will be explained below.

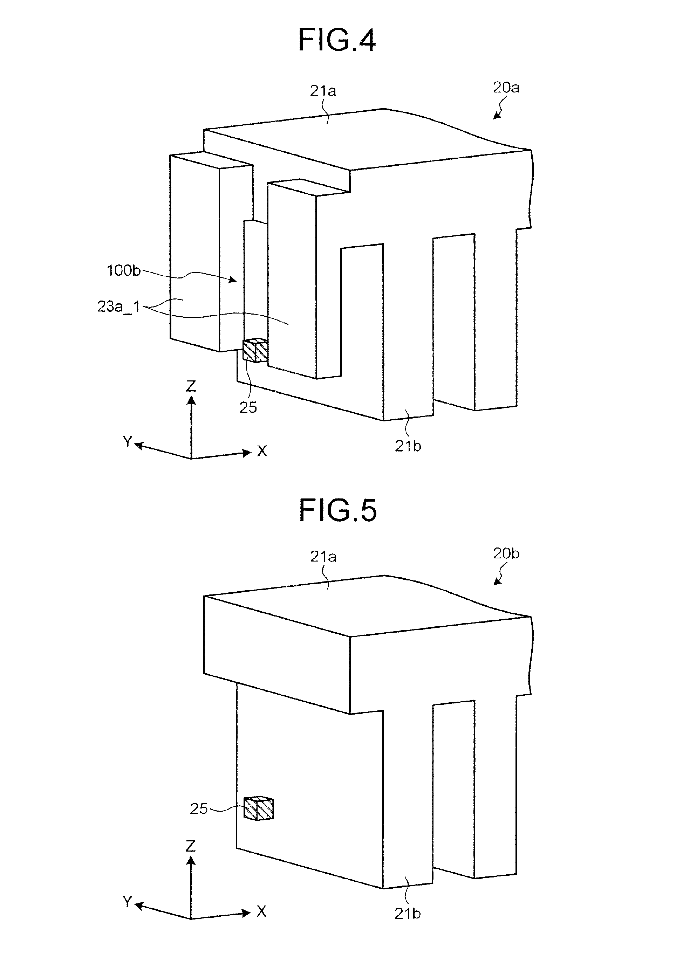

FIGs. 4 and 5 are schematic perspective views illustrating another example of the arrangement relationship of a supporting teeth and a detecting unit.
In the following descriptions, the same parts as those explained already have the same reference numbers, and the overlapping explanation is omitted.

As illustrated in FIG. 4, an armature 20a includes a supporting teeth 23a_1 in place of the supporting teeth 23a according to the first embodiment.

The supporting teeth 23a_1 has a cutout portion 100b. The cutout portion 100b is formed by cutting out the supporting teeth 23a_1 from one end face to the other end face of the supporting teeth 23a_1 in the stroke direction, that is to say, from one end face of the negative direction of X-axis to the other end face of the positive direction of X-axis, similarly to the cutout portion 100a according to the first embodiment.

The cutout portion 100b opens a side (the negative direction of Z-axis) facing the magnetic field unit 10 and an opposite side (the positive direction of Z-axis) of the side facing the magnetic field unit 10. In this way, the supporting teeth 23a_1 may have a shape in which its middle portion is longitudinally cut out when being viewed from the positive direction of X-axis.

In this case, the supporting teeth 23a_1 and the yoke 21a are molded with molding resin (not illustrated) in such a manner that the end faces of the supporting teeth 23a_1 facing the cutout portion 100b and the end face of the yoke 21a in the stroke direction are exposed. Similarly to the first embodiment, the detecting unit 25 is removably mounted on the end face of the supporting teeth 23a_1 or the yoke 21a exposed from the molding resin (not illustrated).

Although it is not illustrated, the armature 20a includes a supporting teeth having the same shape as that of the supporting teeth 23a_1 in place of the supporting teeth 23b according to the first embodiment. Similarly to the first embodiment, these supporting teeth are arranged with respect to the center of the armature core 21 in a point-symmetrical manner when being viewed from the Z-axis direction. As a result, cogging can be reduced in a balanced manner.

As illustrated in FIG. 5, after one of the supporting teeth provided on both ends of the armature core 21 in the stroke direction is all cut out, an armature 20b may include the detecting unit 25 that is provided in the cut-out space.

Although it is not illustrated, a supporting teeth provided at the positive direction side of X-axis has a shape in which it is not cut out. Specifically, the supporting teeth provided at the negative direction side of X-axis have a substantially rectangular-solid shape of which the width of the Y-axis direction is the same as that of the main teeth 21b.

In FIGs. 4 and 5, the detecting unit 25 may be provided in a state where it is floating in the molding resin 24.

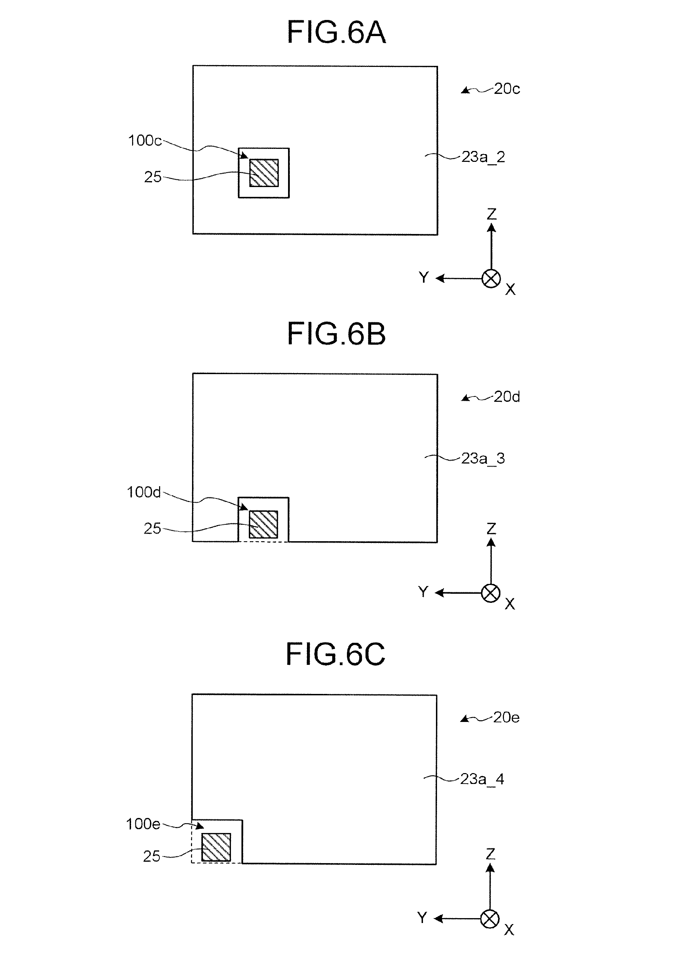

Another example of the arrangement relationship of the supporting teeth and the detecting unit is further explained with reference to FIGs. 6A to 6C. FIGs. 6A to 6C are schematic front views illustrating another example of the arrangement relationship of the supporting teeth and the detecting unit.

As illustrated in FIG. 6A, a supporting teeth 23a_2 included in an armature 20c includes a cutout portion 100c that is a through-hole that penetrates from one end face to the other end face in the stroke direction. In this way, the cutout portion 100c may be a through-hole in which both the Z-axis direction side and the Y-axis direction side are not opened. The detecting unit 25 is provided inside the cutout portion 100c.

As illustrated in FIG. 6B, a supporting teeth 23a_3 included in an armature 20d includes a cutout portion 100d. The cutout portion 100d is formed by cutting out the supporting teeth from one end face to the other end face in the stroke direction and by opening the side (the negative direction of Z-axis) facing the magnetic field unit 10. In this way, the cutout portion 100d may have a shape in which only the side facing the magnetic field unit 10 is opened. The detecting unit 25 is provided inside the cutout portion 100d.

As illustrated in FIG. 6C, a supporting teeth 23a_4 included in an armature 20e includes a cutout portion 100e. The cutout portion 100e is formed by cutting out the supporting teeth from one end face to the other end face in the stroke direction and by opening the side (the negative direction of Z-axis) facing the magnetic field unit 10 and the side (the positive direction of Y-axis) adjacent to the side facing the magnetic field unit 10. In this way, the cutout portion 100e may have a shape in which only the side facing the magnetic field unit 10 and the side adjacent to the side facing the magnetic field unit 10 are opened. The detecting unit 25 is provided inside the cutout portion 100e.

It has been explained in the first and second embodiments that the armature employs the detecting unit 25. However, the armature may employ, instead of the detecting unit 25, a magnetic field detecting unit that is a unit member including the detecting unit 25.

### Third Embodiment

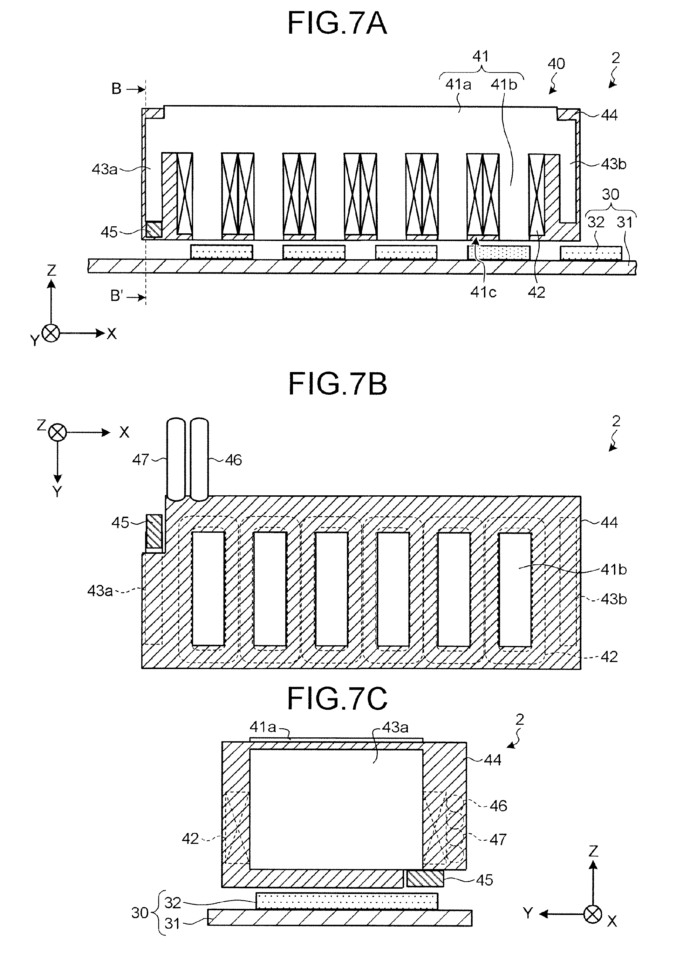

Next, the entire configuration of a linear motor according to the third embodiment is explained with reference to FIGs. 7A to 7C. FIGs. 7A to 7C are respectively a schematic side view, a schematic plan view, and a schematic cross-sectional view of a linear motor 2 according to the third embodiment. FIG. 7B is a schematic plan view of the linear motor 2 illustrated in FIG. 7A when being viewed from the positive direction of Z-axis. FIG. 7C is a schematic cross-sectional view viewed from the B-B' arrow line illustrated in FIG. 7A.

Hereinafter, up and down directions, left and right directions, and front and back directions may be used to explain a relative positional relationship between components of the linear motor. The reference of each direction is the case where the linear motor is provided on a horizontal surface as illustrated in FIG. 7A. Specifically, it is assumed in FIG. 7A that positive and negative directions of X-axis are respectively front and back of the linear motor, positive and negative directions of Y-axis are respectively left and right of the linear motor, and positive and negative directions of Z-axis are respectively up and down of the linear motor.

As illustrated in FIGs. 7A to 7C, the linear motor 2 according to the third embodiment includes a magnetic field unit 30 and an armature 40. It will be explained in the third embodiment that the magnetic field unit 30 is a stator and the armature 40 is a mover. Moreover, the number of magnetic poles and the number of slots are not limited to numbers illustrated in FIGs. 7A to 7C.

The magnetic field unit 30 includes a magnetic field yoke 31 and permanent magnets 32. The magnetic field yoke 31 is a substantially rectangular solid-shaped member that extends along a predetermined direction (herein, X-axis direction). The magnetic field yoke 31 is formed by laminating lamina members such as magnetic steel sheets. However, the magnetic field yoke 31 may be simply formed of a plate material that is not a laminated layer. Moreover, the permanent magnets 32 are laid side-by-side on the magnetic field yoke 31. Herein, it is explained that the magnetic field unit 30 includes the permanent magnets 32. However, the magnetic field unit 30 may include electromagnets instead of the permanent magnets 32.

The armature 40 is a member that is placed opposite the magnetic field unit 30 via a gap and linearly moves along the magnetic field unit 30. The armature 40 includes an armature core 41, armature coils 42, supporting teeth 43a and 43b, molding resin 44, and a magnetic field detecting unit 45. Hereinafter, the moving direction of the armature 40, that is, positive and negative directions of X-axis are referred to as a stroke direction in some cases.

The armature core 41 includes a yoke 41a that is formed in the shape of a substantially rectangular solid and a plurality of main teeth 41b that protrudes from the yoke 41a toward the magnetic field unit 30. The armature core 41 is formed by laminating lamina members such as magnetic steel sheets.

Spaces between the main teeth 41b are referred to as slots 41c. The inner circumferential surfaces of the slots 41c are covered with insulation materials, and the armature coils 42 made by winding insulated covered wires are put in the slots 41c. A lead wire 46 for the motor is connected to the armature coils 42 (see FIG. 7B).

The supporting teeth 43a and 43b are members that are respectively provided on both ends of the armature core 41 in the stroke direction in order to reduce cogging that is a factor of thrust variation. Specifically, the ends of the supporting teeth 43a and 43b are fixed to the yoke 41a, and the supporting teeth 43a and 43b protrude from the ends toward the magnetic field unit 30.

Herein, as illustrated in FIG. 7A, an interval between the permanent magnets 32 and the supporting teeth 43a and 43b is larger than an interval between the permanent magnets 32 and the main teeth 41b. In other words, the up-and-down-direction length of the supporting teeth 43a and 43b is shorter than that of the main teeth 41b. Therefore, the armature 40 has a surplus space, in which all of the main teeth 41b, the armature coils 42, and the supporting teeth 43a are not placed, between the end faces (or, lower end faces of the supporting teeth 43a and 43b) of the supporting teeth 43a and 43b facing the magnetic field unit 30 and the end faces (or, lower end faces of the main teeth 41b) of the main teeth 41b facing the magnetic field unit 30.

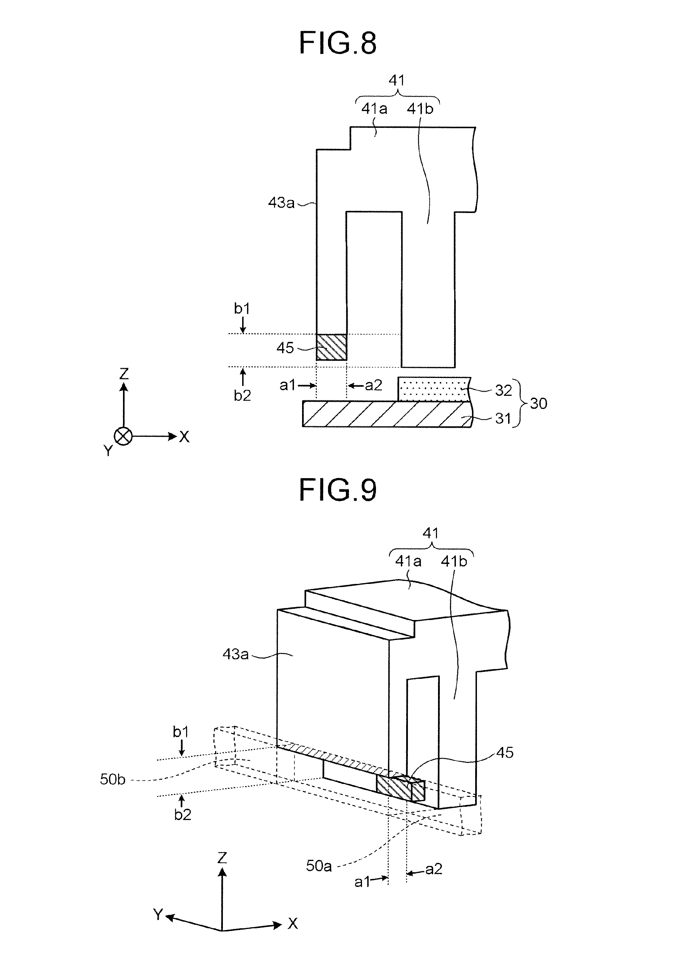

The molding resin 44 is a resin member that molds resin into the armature core 41, the armature coils 42, and the supporting teeth 43a and 43b. As illustrated in FIGs. 7B and 7C, the molding resin 44 covers the supporting teeth 43a to expose at least a part of the lower end face of the supporting teeth 43a. The magnetic field detecting unit 45 is mounted on the end face of the supporting teeth 43a exposed from the molding resin 44. This point is described below with reference to FIG. 9.

The magnetic field detecting unit 45 is a unit member that includes a detecting unit that detects a relative position of the armature 40 to the magnetic field unit 30. The detecting unit according to the third embodiment is a magnetic field detecting unit such as a Hall sensor. The linear motor 2 controls a conduction direction in which electric currents flow into the armature coils 42 on the basis of the detection result of the relative position of the armature 40 performed by the magnetic field detecting unit 45. In addition, a lead wire 47 for a detecting unit is connected to the magnetic field detecting unit 45 (see FIG. 7B).

Herein, the linear motor 2 according to the third embodiment can suppress the reduction of an available stroke of the armature 40 by providing the magnetic field detecting unit 45 in the surplus space between the lower end face of the supporting teeth 43a and the lower end face of the main teeth 41b.

Hereinafter, the arrangement relationship of the supporting teeth 43a and the magnetic field detecting unit 45 is specifically explained with reference to FIGs. 8 and 9. FIG. 8 is a schematic side view illustrating the arrangement relationship of the supporting teeth 43a and the magnetic field detecting unit 45. FIG. 9 is a schematic perspective view illustrating the arrangement relationship of the supporting teeth 43a and the magnetic field detecting unit 45.

As illustrated in FIG. 8, the magnetic field detecting unit 45 is provided in a space surrounded by an area from one end face to the other end face of the supporting teeth 43a in the stroke direction (a1 to a2) and an area from the surface of the supporting teeth 43a facing the magnetic field unit 30 to the surface of the main teeth 41b facing the magnetic field unit 30 (b1 to b2).

Herein, the conventional armature has a problem in that an available stroke is shortened by the length of a detecting unit by providing the detecting unit on a stroke direction end. Particularly, this problem is easily actualized when the supporting teeth are provided on stroke direction ends of the armature core like the third embodiment.

For this reason, it has been explained in the third embodiment that the magnetic field detecting unit 45 is provided in a space between the lower end faces of the supporting teeth 43a and 43b and the lower end faces of the main teeth 41b. As a result, because a length occupied by members other than the armature core 41 can be suppressed in a stroke direction length of the armature 40, the reduction of an available stroke can be suppressed while maintaining a thrust of the armature 40.

Herein, it has been explained that the magnetic field detecting unit 45 is put in the space (a1 to a2) from one end face to the other end face of the supporting teeth 43a in the stroke direction. However, the magnetic field detecting unit 45 may partially protrude from the range of the space.

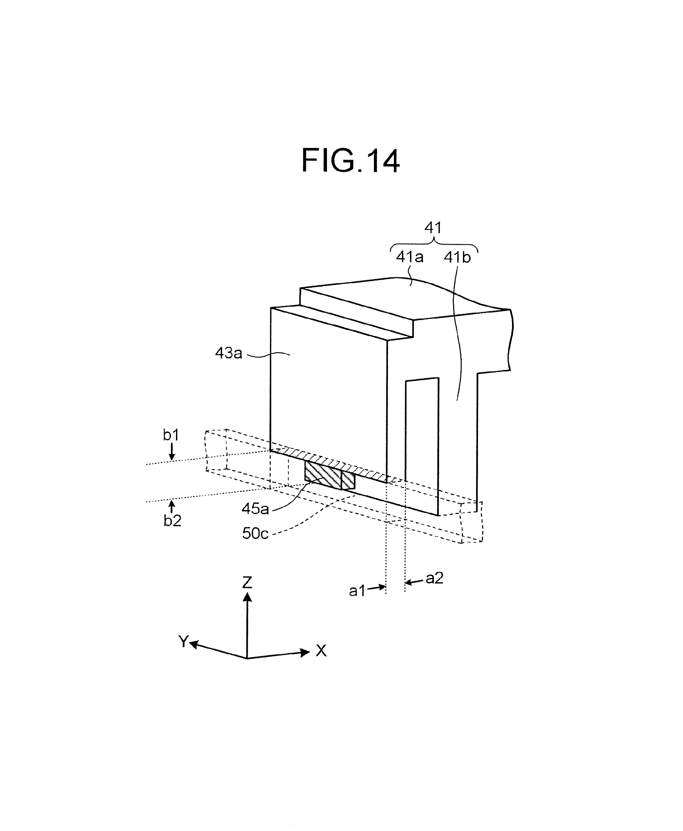

As illustrated in FIG. 9, the magnetic field detecting unit 45 is provided in such a manner that the detecting unit provided therein is located in a right-side space 50a of the supporting teeth 43a in the space, and is mounted on the supporting teeth 43a in a lower-side space (50c in FIG. 14) of the supporting teeth 43a in the space.

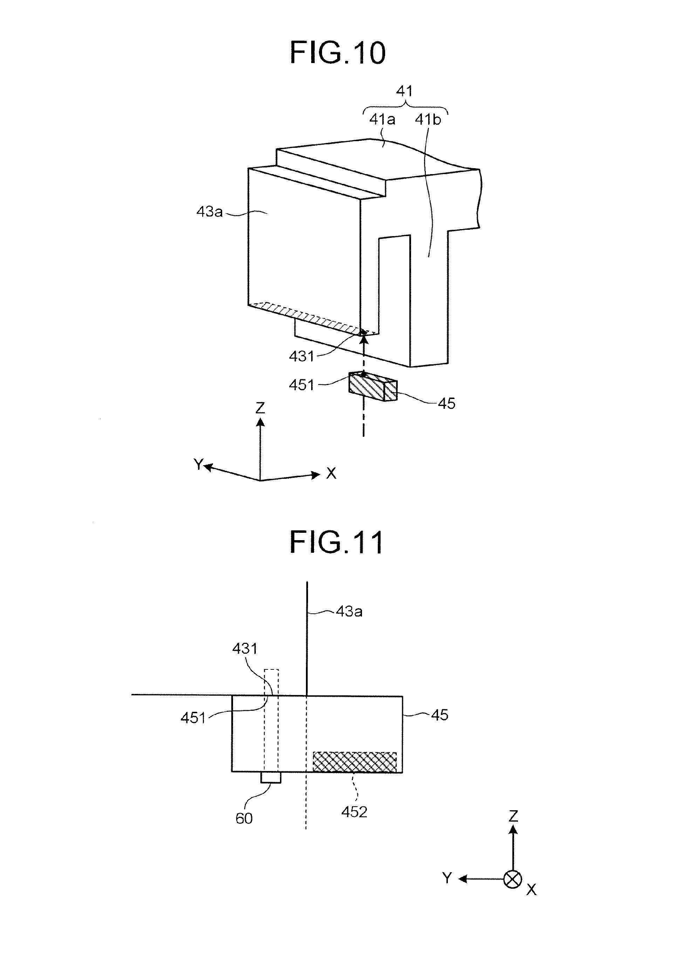

Herein, the mounting arrangement of the magnetic field detecting unit 45 on the supporting teeth 43a and the internal configuration of the magnetic field detecting unit 45 are explained with reference to FIGs. 10 and 11. FIG. 10 is a diagram illustrating an example of the mounting arrangement of the magnetic field detecting unit 45. FIG. 11 is a diagram illustrating the internal configuration of the magnetic field detecting unit 45.

For example, as illustrated in FIG. 10, the supporting teeth 43a has a threaded hole 431 that is formed along the positive direction of Z-axis from the lower end face exposed from the molding resin 44. Moreover, the magnetic field detecting unit 45 has a threaded hole 451 that is formed at a position corresponding to the lower side of the supporting teeth 43a. As illustrated in FIG. 11, the magnetic field detecting unit 45 is mounted on the supporting teeth 43a by inserting a screw 60 into the threaded hole 431 of the supporting teeth 43a and the threaded hole 451 of the magnetic field detecting unit 45.

In this way, assuming that the magnetic field detecting unit 45 is removably provided with respect to the armature core 41 and the supporting teeth 43a that are molded, the magnetic field detecting unit 45 can be easily replaced when the magnetic field detecting unit 45 is degraded or damaged, for example, and thus the maintenance of the armature 40 can be improved.

As illustrated in FIG. 11, a detecting unit 452 included in the magnetic field detecting unit 45 is provided to be located at the right side of the supporting teeth 43a. Specifically, the detecting unit 452 is provided outside the supporting teeth 43a in the direction (Y-axis direction) that is perpendicular to the stroke direction (X-axis direction) and the direction (Z-axis direction) in which the supporting teeth 43a faces the magnetic field unit 30.

In this way, the instability of a detection accuracy of a magnetic field performed by the detecting unit 452 can be appropriately suppressed by providing the detecting unit 452 outside the supporting teeth 43a.

In other words, when the detecting unit 452 is partially located below the supporting teeth 43a, the detecting unit 452 partially comes under the influence of the supporting teeth 43a and thus a detection accuracy of a magnetic field performed by the detecting unit 452 may be unstable. It is considered that the detecting unit 452 is all located below the supporting teeth 43a. In this case, the detecting unit 452 may not be put in the space (a1 to a2 in FIG. 8) from one end face to the other end face of the supporting teeth 43a in the stroke direction in some cases. As a result, this leads to partially locating the detecting unit 452 below the supporting teeth 43a.

Therefore, the instability of a detection accuracy of a magnetic field performed by the detecting unit 452 can be appropriately suppressed by providing the detecting unit 452 outside the supporting teeth 43a.

According to the third embodiment, it is described in FIG. 7C that the permanent magnet 32 extends up to a position facing the detecting unit 452. In other words, because the permanent magnet 32 is generally placed below the supporting teeth 43a, the detecting unit 452 is distant from the permanent magnet 32 and detection accuracy may decrease when the detecting unit 452 is provided outside the supporting teeth 43a.

Therefore, the degradation of detection accuracy can be prevented by extending the permanent magnet 32 up to the position facing the detecting unit 452. However, the permanent magnet 32 may not be extended.

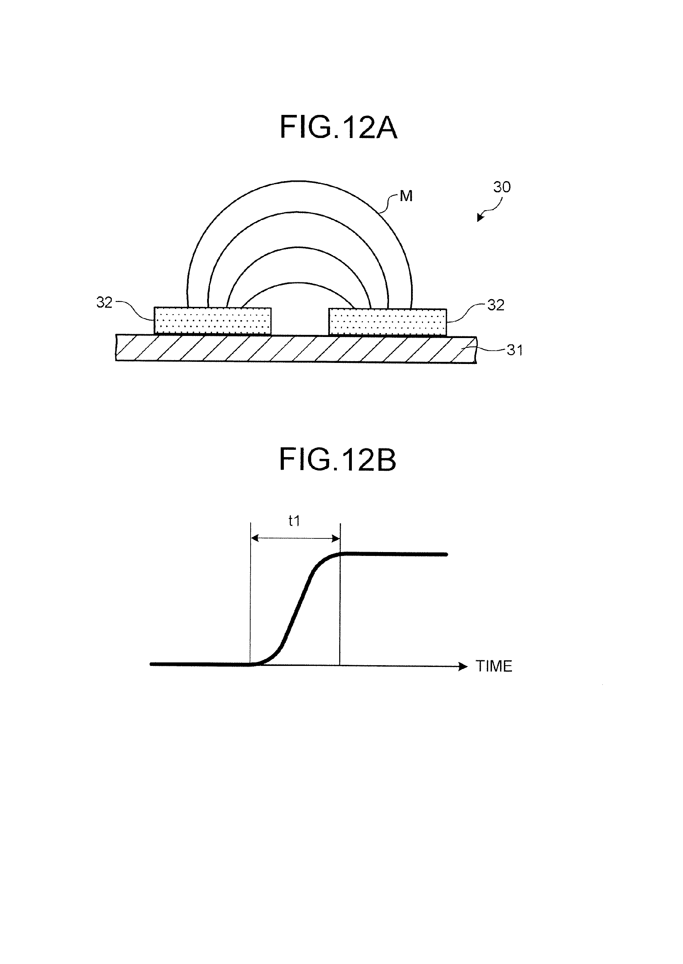

The armature 40 according to the third embodiment can raise a detection accuracy of a magnetic field performed by the detecting unit 452 by providing the detecting unit 452 near the supporting teeth 43a. This point is explained with reference to FIGs. 12A to 13B.

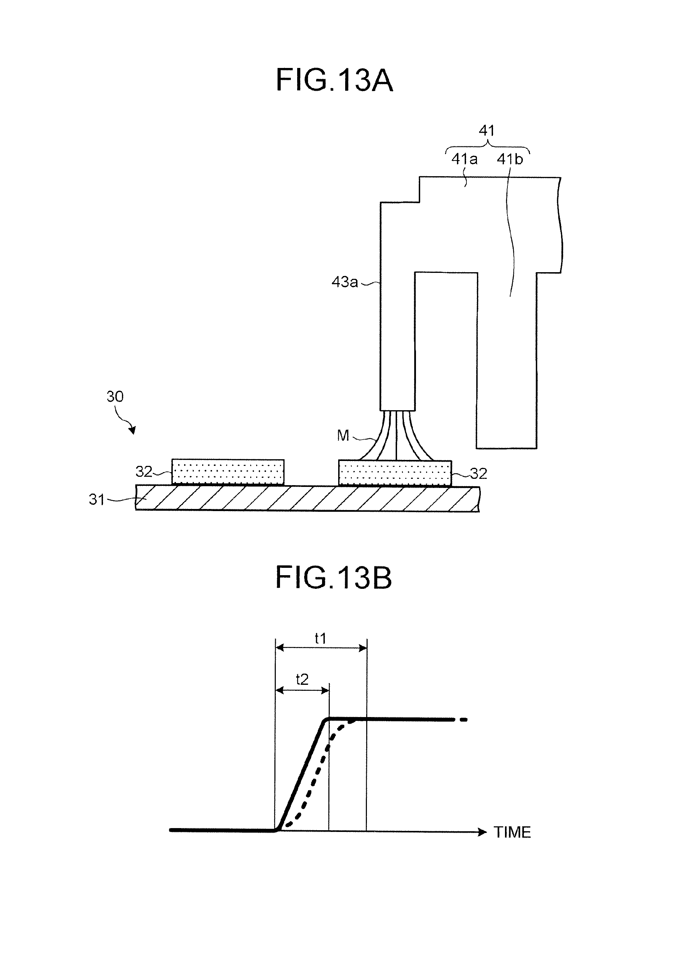

FIG. 12A is a diagram illustrating a magnetic flux formed by the permanent magnets 32. FIG. 13A is a diagram illustrating a magnetic flux formed by the permanent magnet 32 and the supporting teeth 43a. FIG. 12B is a diagram illustrating the detection result of the magnetic flux illustrated in FIG. 12A. FIG. 13B is a diagram illustrating the detection result of the magnetic flux illustrated in FIG. 13A. In FIG. 13B, the detection result of FIG. 13A is illustrated by a solid line and the detection result of FIG. 12B is illustrated by a dotted line. It is assumed that the armature 40 has the same moving speed in the case of the solid line and the dotted line.

As illustrated in FIG. 12A, a magnetic flux M formed by the permanent magnets 32 draws a constant parabola from one (North pole) of the permanent magnets 32 to the other (South pole) of the permanent magnets 32. The detection result of the magnetic flux M detected by the detecting unit 452 has a comparatively gentle rising edge as illustrated in FIG. 12B (see t1 of FIG. 12B).

On the other hand, as illustrated in FIG. 13A, the magnetic flux M output from the permanent magnet 32 is absorbed by the supporting teeth 43a when the supporting teeth 43a exists near the permanent magnet 32. For this reason, a magnetic flux density near the supporting teeth 43a becomes higher as compared to a magnetic flux density of FIG. 12A.

The detecting unit 452 that is a magnetic field detecting unit outputs an output voltage proportional to a magnetic flux density as a detection result. Therefore, as illustrated in FIG. 13B, the detection result of a magnetic field performed by the detecting unit 452 has a steep rising edge as compared to the detection result of FIG. 12B. In other words, as illustrated in FIG. 13B, a time difference between the passage of the magnetic pole of the detecting unit 452 and the output of the detection result of the detecting unit 452 is shorter in the case where the supporting teeth 43a exists near the permanent magnet 32 in comparison with the case where the supporting teeth 43a does not exist near the permanent magnet 32 (see t1 and t2 of FIG. 13B).

Therefore, the time difference becomes shorter by providing the detecting unit 452 of the magnetic field detecting unit 45 near the supporting teeth 43a and thus a detection accuracy of a magnetic field performed by the detecting unit 452 can be raised.

As described above, it has been explained in the third embodiment that the detecting unit is provided in the space from one end face to the other end face of the supporting teeth in the stroke direction and the space from the surface of the supporting teeth facing the magnetic field unit to the surface of the main teeth facing the magnetic field unit. Therefore, the reduction of an available stroke of the armature can be suppressed.

Moreover, it has been explained in the third embodiment that the detecting unit is provided outside the supporting teeth in the direction that is perpendicular to the stroke direction and the direction in which the supporting teeth faces the magnetic field unit. Therefore, the instability of a detection accuracy of a magnetic field performed by the detecting unit can be appropriately suppressed.

The space in which the detecting unit is provided is not limited to the case of the third embodiment. Specifically, it is only sufficient that a space in which a part or the whole of the detecting unit is provided is a space (space closer to the armature core than a1 illustrated in FIG. 8), which is closer to the armature core side than the surface that does not face the armature core among the surfaces of the supporting teeth in the stroke direction, and also a space (space closer to the magnetic field unit than b1 illustrated in FIG. 8), which is closer to the magnetic field unit side than the surface of the supporting teeth facing the magnetic field unit. Therefore, the detecting unit may be provided between the supporting teeth and the magnetic field unit when being viewed from the Y direction of FIG. 8.

Moreover, it has been explained in the third embodiment that the magnetic field detecting unit is provided in the right-side space (the space 50a illustrated in FIG. 9) of the supporting teeth. However, the magnetic field detecting unit may be provided in the left-side space (the space 50b illustrated in FIG. 9) of the supporting teeth.

### Fourth Embodiment

The arrangement relationship of the supporting teeth and the magnetic field detecting unit is not limited to the case of the third embodiment. Therefore, another example of the arrangement relationship of the supporting teeth and the magnetic field detecting unit will be explained in the fourth embodiment.

FIG. 14 is a schematic perspective view illustrating another example of the arrangement relationship of the supporting teeth and the magnetic field detecting unit. In the following descriptions, the same parts as those explained already have the same reference numbers and the overlapping explanation is omitted.

As illustrated in FIG. 14, similarly to the magnetic field detecting unit 45 according to the third embodiment, a magnetic field detecting unit 45a according to the fourth embodiment is provided in a surplus space between the lower end face of the supporting teeth 43a and the lower end face of the main teeth 41b.

Specifically, the magnetic field detecting unit 45a is provided in a space surrounded by an area from one end face to the other end face of the supporting teeth 43a in the stroke direction (a1 to a2) and an area from the surface of the supporting teeth 43a facing the magnetic field unit 30 to the surface of the main teeth 41b facing the magnetic field unit 30 (b1 to b2).

The magnetic field detecting unit 45a according to the fourth embodiment is provided in the space 50c, within the spaces, which is located under the supporting teeth 43a.

In this way, the magnetic field detecting unit 45a may be provided within the range of the supporting teeth 43a in the direction that is perpendicular to the stroke direction and the direction in which the supporting teeth 43a faces the magnetic field unit 30.

Particularly, when the magnetic field detecting unit 45a is put in the space (a1 to a2) from one end face to the other end face of the supporting teeth 43a in the stroke direction, a detection accuracy of a magnetic field performed by the detecting unit 452 can be stable even if it is provided in the space 50c.

Similarly to the magnetic field detecting unit 45 according to the third embodiment, the magnetic field detecting unit 45a according to the fourth embodiment is removably provided with respect to the armature core 41 and the supporting teeth 43a that are molded.

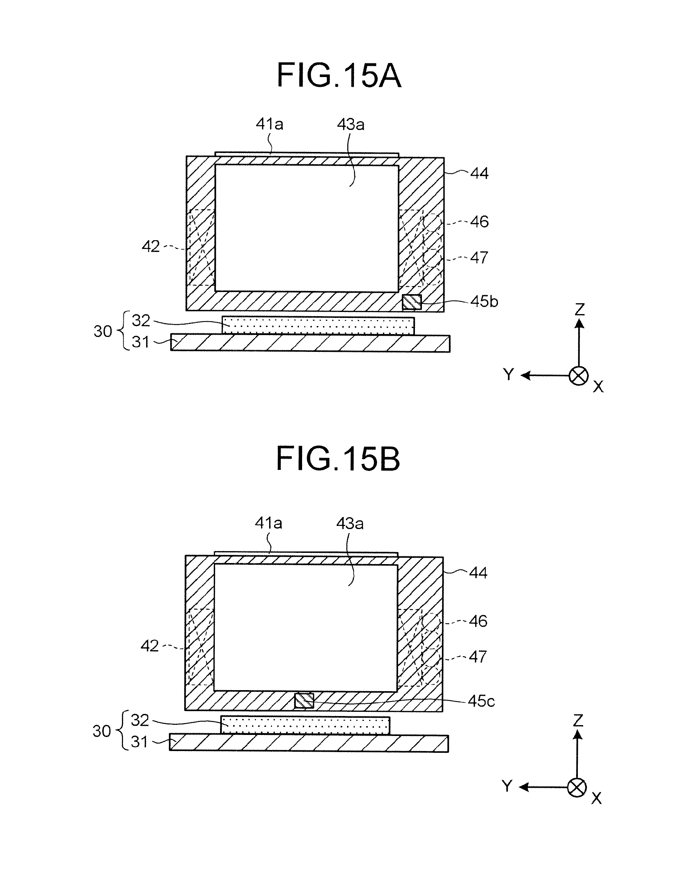

It has been explained in the embodiments that the magnetic field detecting unit is removably provided with respect to the armature core and the supporting teeth that are molded. However, the embodiment is not limited to this. In other words, the magnetic field detecting unit may be molded along with the armature core and the supporting teeth. Hereinafter, this point is explained with reference to FIGs. 15A and 15B. FIGs. 15A and 15B are schematic cross-sectional views illustrating another example of the arrangement relationship of the supporting teeth and the magnetic field detecting unit.

As illustrated in FIGs. 15A and 15B, a magnetic field detecting unit 45b or 45c may be provided in a state where it is not in contact with the supporting teeth 43a, specifically, in a state where it is floating in the molding resin 44. Herein, FIG. 15A illustrates the case where the magnetic field detecting unit 45b is provided at the right side of the supporting teeth 43a. FIG. 15B illustrates the case where the magnetic field detecting unit 45c is provided under the supporting teeth 43a.

It has been explained in the embodiments that the detecting unit is a magnetic field detecting unit. The detecting unit may be a detecting unit other than the magnetic field detecting unit. For example, the detecting unit may be an infrared sensor or the like that detects a relative position of the armature core by performing predetermined markings on surfaces of the permanent magnets facing the armature and optically detecting the markings.

It has been explained in the embodiments that the supporting teeth is formed integrally with the armature core. However, the supporting teeth may be formed separately from the armature core.

It has been explained in the third and fourth embodiments that the magnetic field detecting unit is employed. However, only the detecting unit may be employed.

The following aspects are described in connection with the embodiments.

(1) A linear motor armature includes: a armature core that includes main teeth; supporting teeth that are provided on stroke direction ends of the armature core; and a detecting unit that detects a position of the armature core. The detecting unit is provided in a space that is obtained by cutting out the supporting teeth.

(2) The linear motor armature according to note (1), wherein the supporting teeth includes a cutout portion that is obtained by cutting out the supporting teeth from one end face to the other end face in the stroke direction.

(3) The linear motor armature according to note (2), wherein the cutout portion opens a side facing a magnetic field unit that includes a plurality of magnets laid side-by-side.

(4) The linear motor armature according to note (3), wherein the cutout portion further opens one of sides adjacent to the side facing the magnetic field unit.

(5) The linear motor armature according to note (3) or (4), wherein the cutout portion further opens an opposite side of the side facing the magnetic field unit.

(6) The linear motor armature according to any one of notes (1) to (5), wherein the supporting teeth have a same shape and are respectively provided on both ends of the armature core in the stroke direction in a point-symmetrical manner with respect to a center of the armature core.

(7) The linear motor armature according to note (1), wherein the supporting teeth are respectively provided on both ends of the armature core in the stroke direction, and one of the supporting teeth is all cut out.

(8) The linear motor armature according to any one of notes (1) to (7), wherein the detecting unit is removably provided with respect to the armature core and the supporting teeth that are molded.

(9) A linear motor includes: a magnetic field unit that has a plurality of magnets laid side-by-side; and an armature that is placed opposite the magnetic field unit. The armature includes: an armature core that includes main teeth; supporting teeth that are provided on stroke direction ends of the armature core; and a detecting unit that detects a position of the armature core. The detecting unit is provided in a space that is obtained by cutting out the supporting teeth.

(10) A linear motor armature, which is placed opposite a magnetic field unit that has a plurality of magnets laid side-by-side, includes: an armature core that includes main teeth; supporting teeth that are provided on stroke direction ends of the armature core; and a detecting unit that detects a position of the armature core. The detecting unit is provided in a space that is closer to the armature core than a surface of the supporting teeth that does not face the armature core among surfaces of the supporting teeth in a stroke direction and a space that is closer to the magnetic field unit than a surface of the supporting teeth that faces the magnetic field unit.

(11) The linear motor armature according to note (10), wherein the detecting unit is provided outside the supporting teeth in a direction that is perpendicular to the stroke direction and a direction in which the supporting teeth faces the magnetic field unit.

(12) The linear motor armature according to note (10), wherein the detecting unit is provided within a range of the supporting teeth in a direction that is perpendicular to the stroke direction and a direction in which the supporting teeth faces the magnetic field unit.

(13) The linear motor armature according to note (1), (2), or (3), wherein the detecting unit is removably provided with respect to the armature core and the supporting teeth that are molded.

(14) A linear motor includes: a magnetic field unit that has a plurality of magnets laid side-by-side; and an armature that is placed opposite the magnetic field unit. The armature includes: an armature core that includes main teeth; supporting teeth that are provided on stroke direction ends of the armature core; and a detecting unit that detects a position of the armature core. The detecting unit is provided in a space that is closer to the armature core than a surface of the supporting teeth that does not face the armature core among surfaces of the supporting teeth in a stroke direction and a space that is closer to the magnetic field unit than a surface of the supporting teeth that faces the magnetic field unit

(15) The linear motor according to note (14), wherein the detecting unit is provided outside the supporting teeth in a direction that is perpendicular to the stroke direction and a direction in which the supporting teeth faces the magnetic field unit, and the magnet of the magnetic field unit extends up to a position facing the detecting unit.

## Claims

1. A linear motor armature (20, 20a to 20e, 40) comprising:
an armature core (21, 41) that includes main teeth (21b, 41b);
supporting teeth (23a, 23b, 23a_1 to 23a_4, 43a, 43b) that are provided on stroke direction ends of the armature core (21, 41); and
a detecting unit (25, 452) that detects a position of the armature core (21, 41) and is provided at a position overlapping with the supporting teeth (23a, 23b, 23a_1 to 23a_4, 43a, 43b) in a stroke direction.

2. The linear motor armature (20, 20a to 20e) according to claim 1, wherein the detecting unit (25) is provided in a space that is obtained by cutting out the supporting teeth (23a, 23b, 23a_1 to 23a_4).

3. The linear motor armature (20, 20a to 20e) according to claim 2, wherein the supporting teeth (23a, 23b, 23a_1 to 23a_4) includes a cutout portion (100a to 100e) that is obtained by cutting out the supporting teeth (23a, 23b, 23a_1 to 23a_4) from one end face to the other end face in the stroke direction.

4. The linear motor armature (20, 20a, 20b, 20d, 20e) according to claim 3, wherein the cutout portion (100a, 100b, 100d, 100e) opens a side facing a magnetic field unit (10) that includes a plurality of magnets laid side-by-side.

5. The linear motor armature (20, 20e) according to claim 4, wherein the cutout portion (100a, 100e) further opens one of sides adjacent to the side facing the magnetic field unit (10).

6. The linear motor armature (20, 20a, 20b) according to claim 4 or 5, wherein the cutout portion (100a, 100b) further opens an opposite side of the side facing the magnetic field unit (10).

7. The linear motor armature (20, 20a, 20c to 20e) according to any one of claims 2 to 6, wherein the supporting teeth (23a, 23b, 23a_1 to 23a_4) have a same shape and are respectively provided on both ends of the armature core (21) in the stroke direction in a point-symmetrical manner with respect to a center of the armature core (21).

8. The linear motor armature (40) according to claim 1,
wherein
the armature core (41) and the supporting teeth (43a, 43b) are placed opposite a magnetic field unit (30) that includes a plurality of magnets laid side-by-side, and
the detecting unit (452) is provided in a space surrounded by an area that is closer to the armature core (41) than a surface of the supporting teeth (43a, 43b) that does not face the armature core (41) among surfaces of the supporting teeth (43a, 43b) in the stroke direction and an area that is closer to the magnetic field unit (30) than a surface of the supporting teeth (43a, 43b) that faces the magnetic field unit (30).

9. The linear motor armature (40) according to claim 8, wherein the detecting unit (452) is provided outside the supporting teeth (43a, 43b) in a direction that is perpendicular to the stroke direction and a direction in which the supporting teeth (43a, 43b) faces the magnetic field unit (30).

10. The linear motor armature (40) according to claim 8, wherein the detecting unit (452) is provided within a range of the supporting teeth (43a, 43b) in a direction that is perpendicular to the stroke direction and a direction in which the supporting teeth (43a, 43b) faces the magnetic field unit (30).

11. The linear motor armature (40) according to claim 8, 9, or 10, wherein the detecting unit (452) is removably provided with respect to the armature core (41) and the supporting teeth (43a, 43b) that are molded.

12. A linear motor (1, 2) comprising:
The linear motor armature (20, 20a to 20e, 40) according to claim 1; and
a magnetic field unit (10, 30) that includes a plurality of magnets laid side-by-side.

13. The linear motor (1) according to claim 12, wherein the detecting unit (25) is provided in a space that is obtained by cutting out the supporting teeth (23a, 23b, 23a_1 to 23a_4).

14. The linear motor (2) according to claim 12, wherein
the armature core (41) and the supporting teeth (43a, 43b) is placed opposite the magnetic field unit (30) that includes the plurality of magnets laid side-by-side, and
the detecting unit (452) is provided in a space that is closer to the armature core (41) than a surface of the supporting teeth (43a, 43b) that does not face the armature core (41) among surfaces of the supporting teeth (43a, 43b) in the stroke direction and a space that is closer to the magnetic field unit (30) than a surface of the supporting teeth (43a, 43b) that faces the magnetic field unit (30).

15. The linear motor (2) according to claim 14, wherein
the detecting unit (452) is provided outside the supporting teeth (43a, 43b) in a direction that is perpendicular to the stroke direction and a direction in which the supporting teeth (43a, 43b) faces the magnetic field unit (30), and
the magnet of the magnetic field unit (30) extends up to a position facing the detecting unit (452).
